# EUROPÄISCHE PATENTSCHRIFT

(11) **EP 2 583 888 B1**
(45) Veröffentlichungstag und Bekanntmachung des Hinweises auf die Patenterteilung: **30.11.2016**
(21) Anmeldenummer: 12006491.0
(22) Anmeldetag: 15.09.2012
(51) Int. Cl.: B62M 9/136

(54) **Kettenwerfer-Führungsgerät**
Derailleur guide device
Appareil de guidage de dérailleur

(30) Priorität: 17.10.2011 DE 102011116047
(43) Veröffentlichungstag der Anmeldung: 24.04.2013
(73) Patentinhaber: SRAM Deutschland GmbH, 97424 Schweinfurt (DE)
(72) Erfinder: Santurbane, Mark, 97421 Schweinfurt (DE)

(56) Entgegenhaltungen:
- EP-A2- 1 867 563
- US-A1- 2011 230 287

## Beschreibung

Moderne Fahrräder verfügen meist über mehrere Kettenräder an der Tretkurbeleinrichtung. Ein vorderer Kettenwerfer ("Kettenwerfer" oder "Umwerfer") dient dabei dazu, die Antriebskette vom Eingriff mit einem Kettenrad umzulegen hin zu einem Eingriff am benachbarten Kettenrad. Dazu verfügen sie über eine Kettenführung, die mittels eines Parallelogramm-Mechanismus in einer Richtung quer zur Kettenradebene bewegt wird, direkt auf die Kette einwirkt.

Die durch die Kettenführung an sich schon recht gut gegebene Funktion einer Führung für die Antriebskette kann aber nicht mit absoluter Sicherheit verhindern, dass beim Umschalten vom Eingriff am größeren Kettenrad zum Eingriff am benachbarten, kleineren Kettenrad die Antriebskette außer Eingriff gerät und seitlich innen am kleineren Kettenrad abrutscht und in den Raum zwischen Kettenrädern und Fahrradrahmen gelangt. Für den Fahrradfahrer besteht keine Möglichkeit, die Kette wieder auf einem der Kettenräder aufzulegen, was vor allem in der Situation eines Wettkampfes sehr nachteilig ist.

Aus diesem Grund ist es zur Einführung von zusätzlichen Kettenführungsgeräten gekommen, die auch "Chain Catcher" genannt werden und die zusätzlich zum Kettenwerfer am Fahrradrahmen direkt oder indirekt montiert werden. Eine Ausführungsform eines solchen Gerätes ist in der US 2011/0230287 gezeigt. Das verwendete Kettenführungsgerät ist ein längliches, mehrfach abgebogenes Teil, das mit Hilfe der Schraube zur Befestigung des Kettenwerfers am Kettenwerfer-Aufnahmeteil mit festgeklemmt wird. Nachteilig an einer solchen Einrichtung ist die Notwendigkeit, bei der Installation von Kettenwerfer und Kettenführungsgerät die Justierung beider Komponenten simultan ausführen zu müssen. Der Kettenwerfer muss in der Höhe und zusätzlich in der Winkelausrichtung relativ zum Sitzrohr des Fahrradrahmens ausgerichtet werden. Das Kettenführungsgerät muss in seiner seitlichen Position relativ zum kleinsten Kettenrad positioniert werden, was nur mit Schwierigkeiten gelingt.

Das erfindungsgemäße Kettenführungsgerät hat sich deshalb zur Aufgabe gestellt, die Montage und Justierung zu vereinfachen. Erfindungsgemäß ist dazu ein weiteres Montagemittel zum Montieren des Kettenführungsgerätes vorgesehen. Damit ergibt sich die Möglichkeit, Montage und Ausrichten des Kettenführungsgerätes und des Kettenwerfers unabhängig voneinander nacheinander auszuführen.

Aufbau und Wirkungsweise des Kettenführungsgerätes wird im Folgenden auf der Grundlage der Darstellungen in mehreren Figuren vorgenommen:
- Fig. 1: Bevorzugte Ausführungsform des erfindungsgemäßen Kettenführungsgerätes für die Montage an einem mit dem Sitzrohr des Fahrradrahmens verbundenen Kettenwerfer-Aufnahmeteil
- Fig. 2: Bevorzugte Ausführungsform des erfindungsgemäßen Kettenführungsgerätes nach Fig. 1 in einer Detaildarstellung
- Fig. 3: Erfindungsgemäßes Kettenführungsgerät in einer zweiten Ausführungsform für die Montage an einem Kettenwerfer mit Befestigungsschelle in einer Detaildarstellung
- Fig. 4: Erfindungsgemäßes Kettenführungsgerät in einer dritten Ausführungsform
- Fig. 5: Erfindungsgemäßes Kettenführungsgerät in einer vierten Ausführungsform
- Fig. 6: Ansicht der Ausführungsform nach Fig. 1 als Schnitt parallel zum Sitzrohr
- Fig. 7: Ansicht der Ausführungsform nach Fig. 4 als Schnitt parallel zum Sitzrohr
- Fig. 8: Ansicht der Ausführungsform nach Fig. 5 als Schnitt parallel zum Sitzrohr

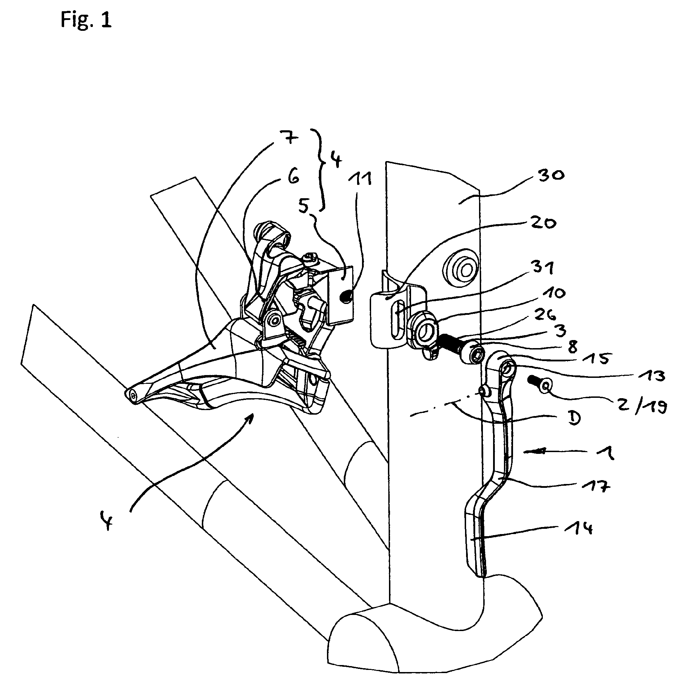

In Figur 1 ist das Kettenführungsgerät (1) gezeigt, das mit einem zusätzlichen Kettenführungs-Montageelement (2) in Gestalt einer Montageschraube (19) am vorderen Kettenwerfer (4) im Verhältnis zum Fahrradrahmen (30) und folglich auch zu den Kettenrädern an der Tretkurbeleinrichtung montiert ist. Die Hauptbestandteile des Kettenwerfers (4) sind ein Basisteil (5), ein Parallelogramm-Mechanismus (6) sowie eine Kettenführung (7). Das Basisteil (5) wird mit einer Befestigungsschraube (3), die in ein Innen-Befestigungsgewinde (11) im Basisteil (5) eingeschraubt wird, am Kettenwerfer-Aufnahmeteil (20) am Fahrradrahmen (30) befestigt. Das Kettenwerfer-Aufnahmeteil (20) ist fest mit dem Fahrradrahmen (30) durch Löten, Schweißen, Kleben, Nieten oder mittels einer anderen Befestigungsart verbunden.

Das Kettenführungsgerät (1) verfügt über einen Führungsabschnitt (14), einen Verbindungsabschnitt (17) und einen Montageabschnitt (15) an dem zum Führungsabschnitt (14) entgegengesetzten Ende, der eine Montageöffnung (13) sowie eine Umfangsfläche (16) am inneren Umfang der Montageöffnung (13) aufweist. Eine Montageschraube (19) ist in der Montageöffnung (13) angeordnet und bringt die Umfangsfläche (16) im Montageabschnitt (15) in reibschlüssigen Kontakt mit der Kontaktfläche (12) am Befestigungsschrauben-Kopf (8) der Befestigungsschraube (3). Die Umfangsfläche (16) und die Kontaktfläche (12) haben eine Kegelform. Durch die sich einstellende Keilwirkung sind relativ geringe Kräfte der Montageschraube (19) in Richtung der Achse A, der Mittelachse der Kontaktfläche (12), ausreichend, um das Kettenführungsgerät (1) sicher in seiner Winkelposition um die Achse A zu fixieren. Das Innen-Montagegewinde (22) zum Einschrauben der Montageschraube (19) ist konzentrisch in der Befestigungsschraube (3) entlang der Achse A angeordnet.

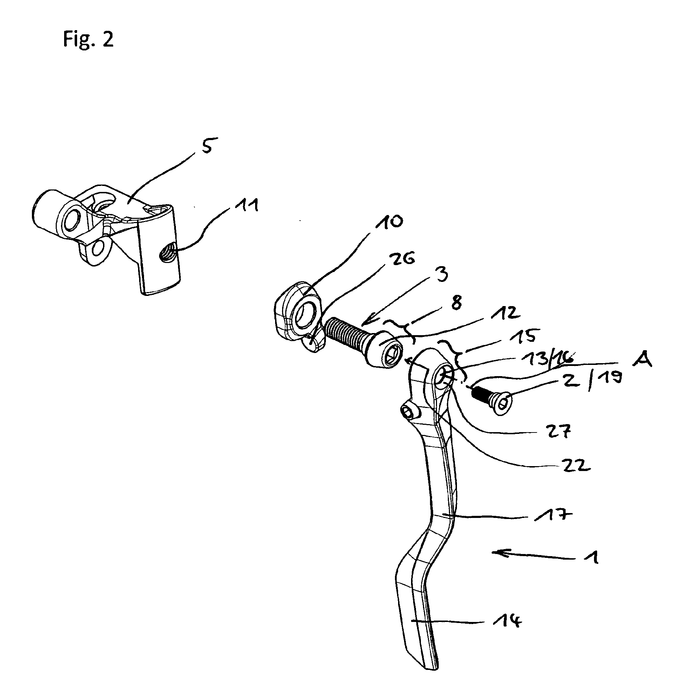

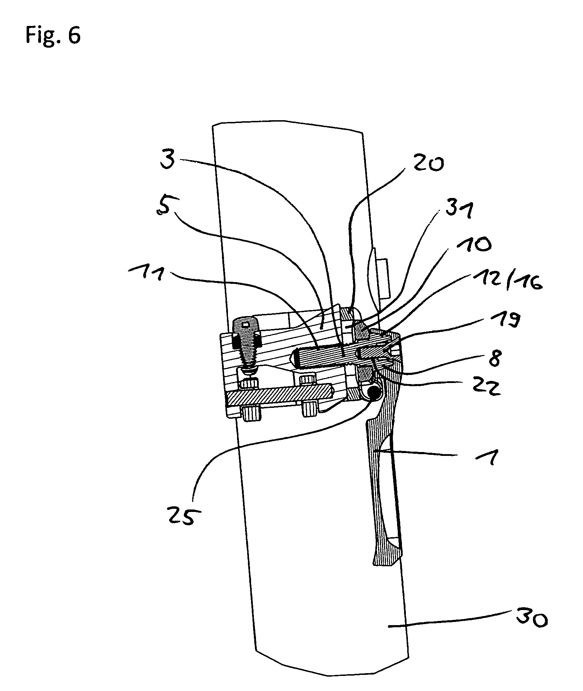

Die Einzelteile zum Befestigen des Kettenwerfers (4) und zum Montieren des Kettenführungsgerätes (1) nach Figur 1 sind noch in Figur 2 in einer Explosionsdarstellung und in Figur 6 in einer Schnittdarstellung detailliert gezeigt. Zum Befestigen des Kettenwerfers (4) am Kettenwerfer-Aufnahmeteil (20) wird die Befestigungsschraube (3) in ein Langloch (31) im Kettenwerfer-Aufnahmeteil (20) eingeführt und in ein Innen-Befestigungsgewinde (11) im Basisteil (5) eingeschraubt. Der Kettenwerfer (4) kann in Richtung der Längserstreckung des Langloches (31) gegenüber dem Fahrradrahmen (30) und damit auch gegenüber den Kettenrädern versetzt werden.

Die Befestigungsschraube (3) verfügt über einen Befestigungsschrauben-Kopf (8) mit einer Kontaktfläche (12) am äußeren Umfang, über eine Innensechskant-Form für den Angriff eines Sechskantschlüssels sowie in axialer Fortsetzung der Innensechskant-Form über ein Innen-Montagegewinde (22) für das Einschrauben des Außengewindes an der Montageschraube (19).

Das Kettenwerfer-Aufnahmeteil (20) wird zwischen dem Basisteil (5) und dem Befestigungsschrauben-Kopf (8) der Befestigungsschraube (3) geklemmt, wobei eine zusätzliche Halteplatte (10) zum Einsatz kommt. Durch die Ausbildung der in Eingriff befindlichen Flächen am Basisteil (5), am Kettenwerfer-Aufnahmeteil (20) sowie an der Halteplatte (10) in Gestalt einer Zylinderoberfläche ist es möglich, den Kettenwerfer (4) im Verhältnis zum Fahrradrahmen (30) zu verdrehen. Die Drehachse ist dabei im Wesentlichen parallel zum Sitzrohr des Fahrradrahmens (30) ausgerichtet.

Mit Hilfe einer Einstellschraube (25), die in Richtung D in einer Ebene senkrecht zur Achse A ausgerichtet ist, ist eine Feineinstellung der Winkelposition des Kettenführungsgerätes (1) möglich. Dazu findet die Einstellschraube (25) gegenüber dem Kettenwerfer-Aufnahmeteil (20) einen Halt am Anschlag (26), der einstückig mit der Halteplatte (10) ausgebildet ist. Das Kettenführungsgerät (1) kann in einfacher Weise um die Achse A verschwenkt werden, da die Kontaktfläche (12) am Befestigungsschrauben-Kopf (8) und auch die Montageschraube (19) konzentrisch um die Achse A angeordnet sind.

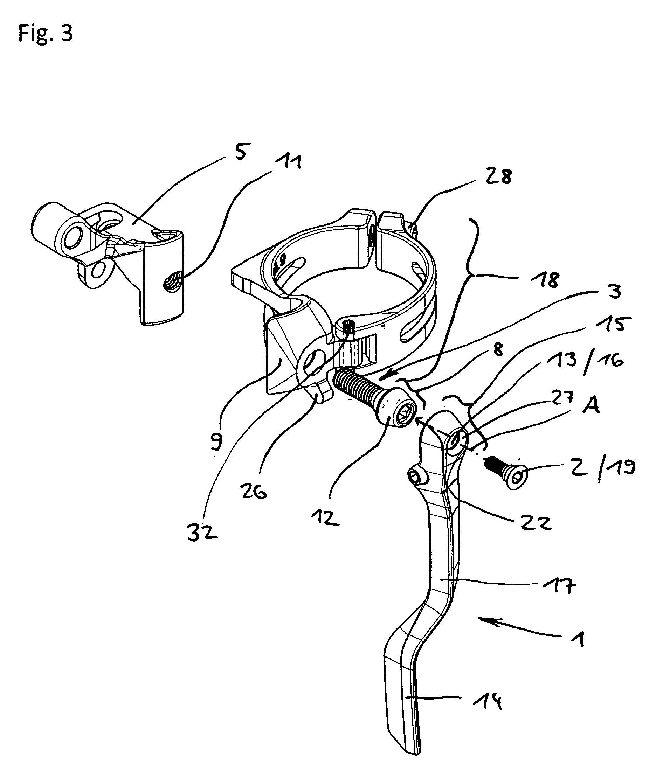

Der in Figur 3 gezeigte Kettenwerfer (4) ist mit einer zusätzlichen Schelle (18) mit einem Kettenwerfer-Montagesockel (9) ausgeführt. Die Schelle (18) weist eine Öffnung auf, durch die sich hindurch das Sitzrohr des Fahrradrahmens (30) erstreckt. Zum Montieren der Schelle (18) am Sitzrohr kann die Schelle (18) durch Verschwenken an einem Scharnier (32) geöffnet und wieder geschlossen werden. Die Fixierung der Schelle (18) am Fahrradrahmen (30) erfolgt mittels einer Klemmschraube (28). Der Kettenwerfer (4) kann durch Verdrehen der Schelle (18) gegenüber dem Fahrradrahmen (30) und damit gegenüber den Kettenrädern ausgerichtet sowie durch Verschieben in senkrechter Richtung entlang des Sitzrohres versetzt werden. Justiermöglichkeiten zwischen Basisteil (5) und Kettenwerfer-Montagesockel (9) sind somit nicht erforderlich.

Der Kettenwerfer-Montagesockel (9) ist mit einer Bohrung versehen, durch die die Befestigungsschraube (3) hindurch eingeführt wird. Das Außengewinde an der Befestigungsschraube (3) wird in ein Innen-Befestigungsgewinde (11) im Basisteil (5) eingeschraubt. Neben dem Basisteil (5) gehören zum Kettenwerfer (4) ein Parallelogramm-Mechanismus (6) sowie eine Kettenführung (7). Beide Bestandteile sind in Figur 3 nicht dargestellt.

Die Ausbildung von Kettenführungsgerät (1), Montageschraube (19), Befestigungsschraube (3) sowie Justierschraube (29) entspricht der Ausführung gemäß Figur 1.

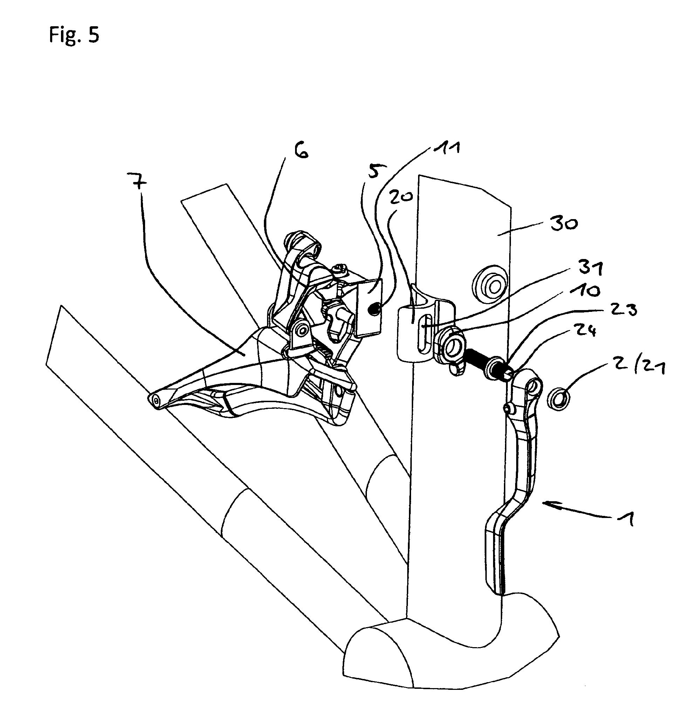

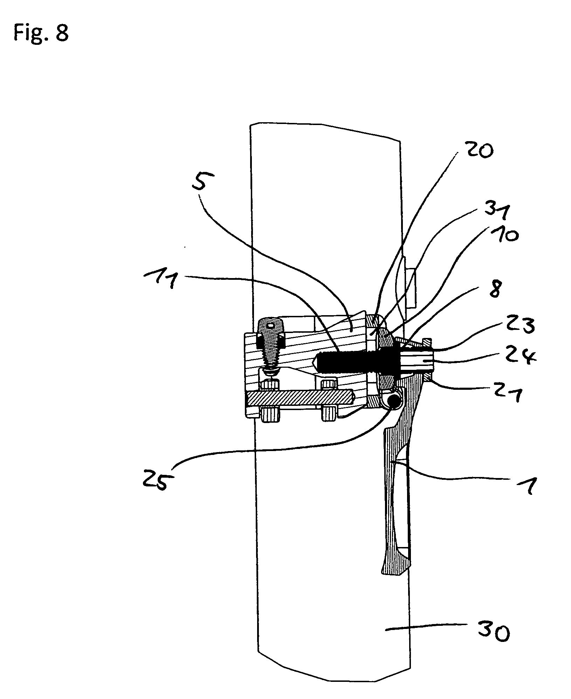

Es entstehen noch weitere Ausführungsformen des Kettenführungsgerätes (1) bei einem Austausch der Montageschraube (19) durch eine Montagemutter (21), die in den Figuren 5 und 8 dargestellt ist. Zum Montieren des Kettenführungsgerätes (1) am Kettenwerfer (4) wird die Montagemutter (21) auf ein Außen-Montagegewinde (23) am Montagebolzen (24) aufgeschraubt.

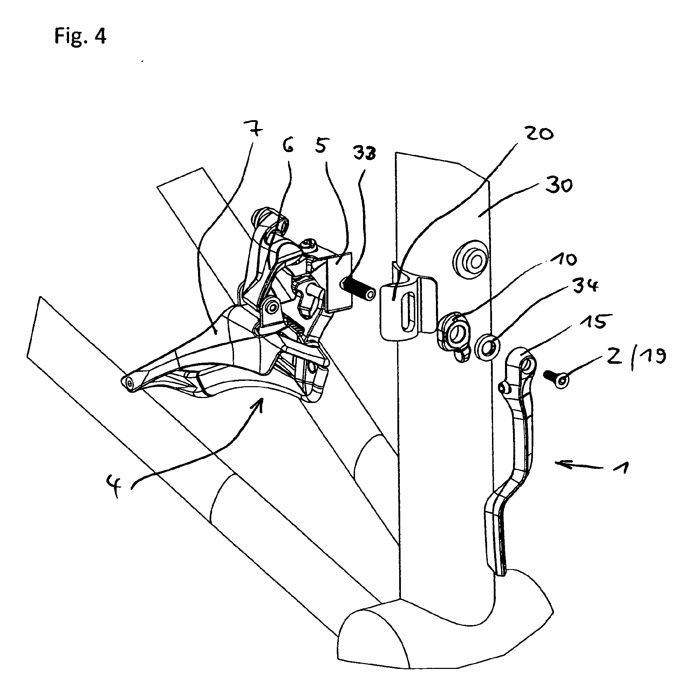

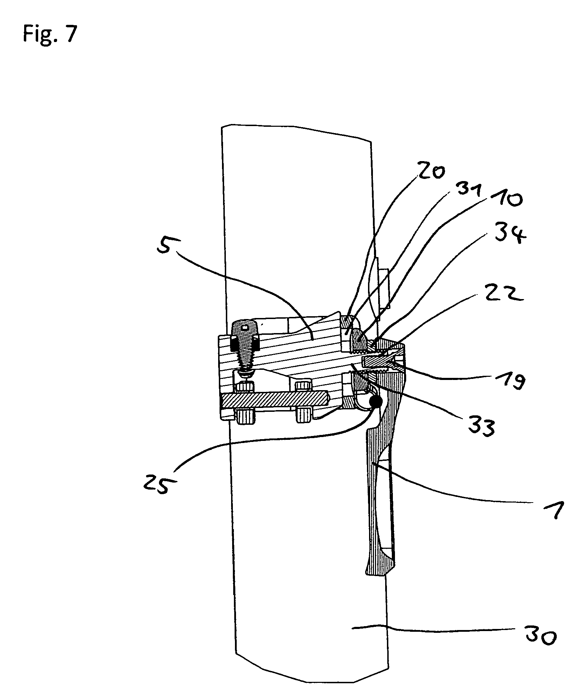

Der Kettenwerfer (4) gemäß den Figuren 4 und 7 weist einen Befestigungsbolzen (33) mit Außengewinde am Basisteil (5) auf. Auf dieses Außengewinde wird zum Befestigen des Kettenwerfers (4) am Kettenwerfer-Aufnahmeteil (20) eine Befestigungsmutter (34) geschraubt. Die Befestigungsmutter (34) weist am Außenumfang nicht dargestellte Elemente zum Eingriff mit einem Werkzeug auf. Der Befestigungsbolzen (33) ist in das Basisteil (5) eingepresst, eingeklebt, auf andere Weise mit dem Basisteil (5) verbunden, einstückig mit dem Basisteil (5) ausgebildet oder der Befestigungsbolzen (33) ist durch eine Durchgangsbohrung im Basisteil (5) hindurchgesteckt und weist einen Kopf an dem im Basisteil (5) befindlichen Ende auf. Die Halteplatte (10) sowie die Montageschraube (19) sind ausgeführt wie bei der Ausführungsform gemäß Figur 1. Das Kettenführungsgerät (1) weist im Verhältnis zur Ausführung in Figur 1 einen abgewandelten Montageabschnitt (15) auf, um mit der Befestigungsmutter (34) einen flächigen Kontakt zu haben.

Weitere erfindungsgemäße Ausführungsformen von Kettenführungsgeräten (1) ergeben sich dann, wenn wie in der Figur 2 dargestellt, Mittel zum Montieren des Kettenführungsgerätes (1) zusätzlich an der Halteplatte (10) gemäß Figur 2 vorgesehen werden, ausgehend wiederum von einem Innen-Montagegewinde (22) in der Halteplatte (10) oder von einem Außen-Montagegewinde (23) an einem zusätzlichen bolzenförmigen Teil an der Halteplatte (10).

Bei einer weiterhin möglichen, nicht in den Figuren dargestellten, Ausführungsform eines Kettenwerfers, mit dem das erfindungsgemäße Kettenführungsgerät (1) zum Einsatz kommt, sind Basisteil (5) und Kettenwerfer-Montagesockel (9) an der Schelle (18) gemäß Figur 3 einstückig ausgebildet, wobei weiterhin die Schelle (18) beibehalten wird und die Befestigungsschraube (3) entfällt. Bei diesem Typ von Kettenwerfer ist ein zusätzliches Innen-Montagegewinde (22) im Basisteil (5) vorhanden, oder es ragt ein zusätzlicher Bolzen in der Art des Befestigungsbolzen (33) am Basisteil (5) hervor, wie er auch in Figur 7 bei einer Ausführungsform von Kettenwerfer ohne Schelle gezeigt ist. An diesem Bolzen ist wiederum ein Gewinde vorgesehen, um mittels eines Kettenführungs-Montageelement (2) das Kettenführungsgerät (1) am Kettenwerfer (4) zu montieren.

### Bezugszeichen

| | | | |
|---|---|---|---|
| 1 | Kettenführungsgerät | 30 | Fahrradrahmen |
| 2 | Kettenführungs-Montageelement | 31 | Langloch |
| 3 | Befestigungsschraube | 32 | Scharnier |
| 4 | Vorderer Kettenwerfer | 33 | Befestigungsbolzen |
| 5 | Basisteil | 34 | Befestigungsmutter |
| 6 | Parallelogramm-Mechanismus | A | Achse |
| 7 | Kettenführung | D | Richtung |
| 8 | Befestigungsschrauben-Kopf | | |
| 9 | Kettenwerfer-Montagesockel | | |
| 10 | Halteplatte | | |
| 11 | Innen-Befestigungsgewinde | | |
| 12 | Kontaktfläche | | |
| 13 | Montageöffnung | | |
| 14 | Führungsabschnitt | | |
| 15 | Montageabschnitt | | |
| 16 | Umfangsfläche | | |
| 17 | Verbindungsabschnitt | | |
| 18 | Schelle | | |
| 19 | Montageschraube | | |
| 20 | Kettenwerfer-Aufnahmeteil | | |
| 21 | Montagemutter | | |
| 22 | Innen-Montagegewinde | | |
| 23 | Außen-Montagegewinde | | |
| 24 | Montagebolzen | | |
| 25 | Einstellschraube | | |
| 26 | Anschlag | | |
| 27 | Ansenkung | | |
| 28 | Klemmschraube | | |
| 29 | Justierschraube | | |

## Patentansprüche

1. Kettenführungs-Anordnung zum Führen einer Antriebskette auf einem Satz von vorderen Kettenrädern eines Fahrrades mit einem Fahrradrahmen (30),
mit einem Kettenführungsgerät (1), das für die Installation an einem Basisteil (5) eines vorderen Kettenwerfers (4) auf einem Fahrrad ausgebildet ist,
wobei der vordere Kettenwerfer (4) mit einem Montagemittel (3, 24, 33) am Fahrradrahmen (30) befestigbar ist, und
wobei das Kettenführungsgerät (1) enthält:
einen Montageabschnitt (15) mit einer Kontaktfläche (12) und einer Montageöffnung (13);
einen zum Montageabschnitt (15) entgegen gesetzt angeordneten Führungsabschnitt (14), der positionierbar ist, um mit der Antriebskette zusammen zu wirken;
einen Verbindungsabschnitt (17) zwischen dem Montageabschnitt (15) und
dem Führungsabschnitt (14);
**dadurch gekennzeichnet, dass**
der Montageabschnitt (15) des Kettenführungsgerätes (1) mit einem weiteren Montagemittel in Form eines Kettenführungs-Montageelements (2, 19, 21) im Verhältnis zum Basisteil (5) des vorderen Kettenwerfers (4) montierbar ist.

2. Kettenführungs-Anordnung zum Führen einer Antriebskette nach Anspruch 1, **dadurch gekennzeichnet,**
**dass** eine Befestigungsschraube (3) in ein Innen-Befestigungsgewinde (11) im Basisteil (5) des vorderen Kettenwerfers (4) einschraubbar ist, um den vorderen Kettenwerfer (4) am Fahrradrahmen (30) zu befestigen.

3. Kettenführungs-Anordnung zum Führen einer Antriebskette nach Anspruch 1, **dadurch gekennzeichnet,**
**dass** das Basisteil (5) des vorderen Kettenwerfers (4) integral ausgebildet ist mit einer Schelle (18) des vorderen Kettenwerfers (4), wobei das Basisteil (5) ein Innen-Montagegewinde (22) oder ein Außen-Montagegewinde (23) zum Montieren des Kettenführungsgerätes (1) aufweist.

4. Kettenführungs-Anordnung zum Führen einer Antriebskette nach Anspruch 1, **dadurch gekennzeichnet,**
**dass** am Basisteil (5) ein Befestigungsbolzen (33) mit einem Außengewinde angeordnet ist, auf den eine Befestigungsmutter (34) aufschraubbar ist, um den Kettenwerfer (4) am Fahrradrahmen (30) zu befestigen.

5. Kettenführungs-Anordnung zum Führen einer Antriebskette nach Anspruch 2 oder 4, **dadurch gekennzeichnet,**
**dass** eine Halteplatte (10) gegen das Basisteil (5) des vorderen Kettenwerfers (4) klemmbar ist.

6. Kettenführungs-Anordnung zum Führen einer Antriebskette nach einem der Ansprüche 2 bis 5,
**dadurch gekennzeichnet,**
**dass** das Kettenführungs-Montageelement (2) eine Montageschraube (19) ist, die in ein Innen-Montagegewinde (22) in einem Befestigungsschrauben-Kopf (8) der Befestigungsschraube (3), im Basisteil (5) oder in der Halteplatte (10) schraubbar ist.

7. Kettenführungs-Anordnung zum Führen einer Antriebskette nach einem der Ansprüche 2 bis 5,
**dadurch gekennzeichnet,**
**dass** das Kettenführungs-Montageelement (2) eine Montagemutter (21) ist, die auf ein Außen-Montagegewinde (23) am Befestigungsschrauben-Kopf (8) der Befestigungsschraube (3) oder an einem Montagebolzen (24) als Bestandteil des Basisteils (5) oder als Bestandteil der Halteplatte (10) schraubbar ist.

8. Kettenführungs-Anordnung zum Führen einer Antriebskette nach Anspruch 6, **dadurch gekennzeichnet,**
**dass** eine Kontaktfläche (12) am Befestigungsschrauben-Kopf (8) eine konische Form hat und in Kontakt mit einer inneren Umfangsfläche (16) in der Montageöffnung (13) im Montageabschnitt (15) des Kettenführungsgerätes (1) bringbar ist.

9. Kettenführungs-Anordnung zum Führen einer Antriebskette nach Anspruch 2 oder 5, **dadurch gekennzeichnet,**
**dass** im Montageabschnitt (15) des Kettenführungsgerätes (1) eine Einstellschraube (25) in einer Richtung D in einer Ebene senkrecht zu einer Achse A einer Kontaktfläche (12) eines Befestigungsschrauben-Kopfes (8) einschraubbar ist, wobei sich die Einstellschraube (25) gegen einen Anschlag (26) gegenüber dem Basisteil (5) abstützt, um ein Einstellen des Kettenführungsgerätes (1) in einer Winkelposition um die Achse A zu erlauben.

10. Methode zum Montieren eines Kettenführungsgerätes (1) an einen vorderen Kettenwerfer (4) für ein Fahrrad mit einem Fahrradrahmen (30) mit einem Kettenführungs-Montageelement (2), nachdem der vordere Kettenwerfer (4) am Fahrradrahmen (30) befestigt worden ist, ohne die Nutzung des Kettenführungs-Montageelementes (2), das die folgenden Schritte enthält:
Befestigen des vorderen Kettenwerfers (4) am Fahrradrahmen (30);
Positionieren des vorderen Kettenwerfers (4) in der exakten Position im Verhältnis zu den Kettenrädern;
Montieren des Kettenführungsgerätes (1) an den vorderen Kettenwerfer (4) mittels des Kettenführungs-Montageelementes (2) mit der Beibehaltung der Position des vorderen Kettenwerfers (4) im Verhältnis zu den Kettenrädern;
Einstellen des Kettenführungsgerätes (1) im Verhältnis zu den Kettenrädern.

## Claims

1. Chain guide arrangement for guiding a driving chain on a set of front sprockets of a bicycle with a bicycle frame (30),
having a chain guide device (1) which is designed for installation on a base part (5) of a front derailleur (4) on a bicycle,
wherein the front derailleur (4) is fastenable to the bicycle frame (30) with a mounting means (3, 24, 33), and
wherein the chain guide device (1) contains:
a mounting portion (15) with a contact surface (12) and a mounting opening (13);
a guide portion (14) which is arranged in an opposed manner to the mounting portion (15) and
can be positioned in order to interact with the driving chain;
a connecting portion (17) between the mounting
portion (15) and the guide portion (14);
**characterized in that**
the mounting portion (15) of the chain guide device (1) can be mounted with a further mounting means in the form of a chain guide mounting element (2, 19, 21) in relation to the base part (5) of the front derailleur (4).

2. Chain guide arrangement for guiding a driving chain according to Claim 1, **characterized in that** a fastening screw (3) is screwable into an inner fastening thread (11) in the base part (5) of the front derailleur (4) in order to fasten the front derailleur (4) to the bicycle frame (30).

3. Chain guide arrangement for guiding a driving chain according to Claim 1, **characterized in that** the base part (5) of the front derailleur (4) is formed integrally with a clip (18) of the front derailleur (4), wherein the base part (5) has an internal mounting thread (22) or an external mounting thread (23) for the mounting of the chain guide device (1).

4. Chain guide arrangement for guiding a driving chain according to Claim 1, **characterized in that** a fastening bolt (33) with an external thread, onto which a fastening nut (34) can be screwed in order to fasten the derailleur (4) to the bicycle frame (30), is arranged on the base part (5).

5. Chain guide arrangement for guiding a driving chain according to Claim 2 or 4, **characterized in that** a holding plate (10) can be clamped against the base part (5) of the front derailleur (4).

6. Chain guide arrangement for guiding a driving chain according to one of Claims 2 to 5, **characterized in that** the chain guide mounting element (2) is a mounting screw (19) which is screwable into an internal mounting thread (22) in a fastening screw head (8) of the fastening screw (3), in the base part (5) or in the holding plate (10).

7. Chain guide arrangement for guiding a driving chain according to one of Claims 2 to 5, **characterized in that** the chain guide mounting element (2) is a mounting nut (21) which is screwable onto an external mounting thread (23) on the fastening screw head (8) of the fastening screw (3) or on a mounting bolt (24) as an integral part of the base part (5) or as integral part of the holding plate (10).

8. Chain guide arrangement for guiding a driving chain according to Claim 6, **characterized in that** a contact surface (12) on the fastening screw head (8) has a conical shape and can be brought into contact with an inner circumferential surface (16) in the mounting opening (13) in the mounting portion (15) of the chain guide device (1).

9. Chain guide arrangement for guiding a driving chain according to Claim 2 or 5, **characterized in that**, in the mounting portion (15) of the chain guide device (1), an adjustment screw (25) is screwable in a direction D in a plane perpendicular to an axis A of a contact surface (12) of a fastening screw head (8), wherein the adjustment screw (25) is supported against a stop (26) in relation to the base part (5) in order to permit an adjustment of the chain guide device (1) in an angular position about the axis (A).

10. Method for mounting a chain guide device (1) onto a front derailleur (4) for a bicycle having a bicycle frame (30) with a chain guide mounting element (2) after the front derailleur (4) has been fastened to the bicycle frame (30), without the use of the chain guide mounting element (2), which contains the following steps:
fastening the front derailleur (4) to the bicycle frame (30) ;
positioning the front derailleur (4) in the exact position in relation to the sprockets;
mounting the chain guide device (1) onto the front derailleur (4) by means of the chain guide mounting element (2) with the position of the front derailleur (4) in relation to the sprockets being maintained;
adjusting the chain guide device (1) in relation to the sprockets.

## Revendications

1. Arrangement de guidage de chaîne destiné à guider une chaîne d'entraînement sur un jeu de roues à chaîne avant d'une bicyclette munie d'un cadre de bicyclette (30),
comprenant un appareil de guidage de chaîne (1) qui est configuré pour l'installation sur une pièce de base (5) d'un projecteur de chaîne (4) avant sur la bicyclette, le projecteur de chaîne (4) avant pouvant être fixé au cadre de bicyclette (30) avec un accessoire de montage (3, 24, 33), et
l'appareil de guidage de chaîne (1) contenant :
une portion de montage (15) munie d'une surface de contact (12) et d'une ouverture de montage (13) ;
une portion de guidage (14) disposée à l'opposé de la portion de montage (15) et qui peut être positionnée pour coopérer avec la chaîne d'entraînement ;
une portion de liaison (17) entre la portion de montage (15) et la portion de guidage (14) ;
**caractérisé en ce que**
la portion de montage (15) de l'appareil de guidage de chaîne (1) peut être montée avec un accessoire de montage supplémentaire sous la forme d'un élément de montage de guide-chaîne (2, 19, 21) en rapport avec la pièce de base (5) du projecteur de chaîne (4) avant.

2. Arrangement de guidage de chaîne destiné à guider une chaîne d'entraînement selon la revendication 1, **caractérisé en ce qu'**une vis de fixation (3) peut être vissée dans un filet de fixation intérieur (11) dans la pièce de base (5) du projecteur de chaîne (4) avant afin de fixer le projecteur de chaîne (4) avant au cadre de bicyclette (30).

3. Arrangement de guidage de chaîne destiné à guider une chaîne d'entraînement selon la revendication 1, **caractérisé en ce que** la pièce de base (5) du projecteur de chaîne (4) avant est formée d'un seul tenant avec un collier (18) du projecteur de chaîne (4) avant, la pièce de base (5) possédant un filet de montage intérieur (22) ou un filet de montage extérieur (23) servant au montage de l'appareil de guidage de chaîne (1).

4. Arrangement de guidage de chaîne destiné à guider une chaîne d'entraînement selon la revendication 1, **caractérisé en ce qu'**un boulon de fixation (33) muni d'un filet extérieur est disposé sur la pièce de base (5), sur lequel peut être vissé un écrou de fixation (34) afin de fixer le projecteur de chaîne (4) au cadre de bicyclette (30).

5. Arrangement de guidage de chaîne destiné à guider une chaîne d'entraînement selon la revendication 2 ou 4, **caractérisé en ce qu'**une plaque de maintien (10) peut être serrée contre la pièce de base (5) du projecteur de chaîne (4) avant.

6. Arrangement de guidage de chaîne destiné à guider une chaîne d'entraînement selon l'une des revendications 2 à 5, **caractérisé en ce que** l'élément de montage de guide-chaîne (2) est une vis de montage (19) qui peut être vissée dans un filet de montage intérieur (22) dans une tête de vis de fixation (8) de la vis de fixation (3), dans la pièce de base (5) ou dans la plaque de maintien (10).

7. Arrangement de guidage de chaîne destiné à guider une chaîne d'entraînement selon l'une des revendications 2 à 5, **caractérisé en ce que** l'élément de montage de guide-chaîne (2) est un écrou de montage (21) qui peut être vissé sur un filet de montage extérieur (23) sur la tête de vis de fixation (8) de la vis de fixation (3) ou sur un boulon de montage (24) faisant partie intégrante de la pièce de base (5) ou faisant partie intégrante de la plaque de maintien (10).

8. Arrangement de guidage de chaîne destiné à guider une chaîne d'entraînement selon la revendication 6, **caractérisé en ce qu'**une surface de contact (12) sur la tête de vis de fixation (8) possède une forme conique et peut être amenée en contact avec une surface périphérique intérieure (16) dans l'ouverture de montage (13) dans la portion de montage (15) de l'appareil de guidage de chaîne (1).

9. Arrangement de guidage de chaîne destiné à guider une chaîne d'entraînement selon l'une des revendications 2 ou 5, **caractérisé en ce qu'**une vis de réglage (25) peut être vissée dans la portion de montage (15) de l'appareil de guidage de chaîne (1) dans une direction D dans un plan perpendiculaire à un axe A d'une surface de contact (12) d'une tête de vis de fixation (8), la vis de réglage (25) s'appuyant contre une butée (26) par rapport à la pièce de base (5) afin de permettre un réglage de l'appareil de guidage de chaîne (1) dans une position angulaire autour de l'axe A.

10. Procédé de montage d'un appareil de guidage de chaîne (1) sur un projecteur de chaîne (4) avant pour une bicyclette munie d'un cadre de bicyclette (30) avec un élément de montage de guide-chaîne (2), après avoir fixé le projecteur de chaîne (4) avant au cadre de bicyclette (30), sans utiliser l'élément de montage de guide-chaîne (2), lequel comprend les étapes suivantes :
fixation du projecteur de chaîne (4) avant au cadre de bicyclette (30) ;
positionnement du projecteur de chaîne (4) avant dans la position exacte par rapport aux roues à chaîne ;
montage de l'appareil de guidage de chaîne (1) sur le projecteur de chaîne (4) avant au moyen de l'élément de montage de guide-chaîne (2) en conservant la position du projecteur de chaîne (4) avant par rapport aux roues à chaîne ;
réglage de l'appareil de guidage de chaîne (1) par rapport aux roues à chaîne.
